# EUROPEAN PATENT SPECIFICATION

(11) **EP 1 953 038 B1**
(45) Date of publication and mention of the grant of the patent: **21.07.2010**
(21) Application number: 08250407.7
(22) Date of filing: 04.02.2008
(51) Int. Cl.: B60P 1/64, B65D 90/14, B66F 3/46

(54) **Removable load carrying trailer body and vehicle trailer and body combination**
Abnehmbarer lasttragender Wagenkasten und Anhänger und Kastenkombination
Châssis de remorque portant une charge amovible et combinaison de remorque de véhicule et de châssis

(30) Priority: 02.02.2007 GB 0701974
(43) Date of publication of application: 06.08.2008
(73) Proprietor: Traildec Limited, Herston Cross House 230 High Street Swanage Dorset BH16 6JL (GB)
(72) Inventor: Mason, Stephen, Poole, Dorset BH17 7AL (GB)
(74) Representative: Locke, Andrew Robert

(56) References cited:
- WO-A-01/03971
- GB-A- 2 084 110
- GB-A- 2 354 757
- US-A- 3 289 868
- US-A- 6 155 770

## Description

This invention relates to a removable load-carrying trailer body, and to a vehicle trailer and body combination.

We have appreciated that there are advantages in being able to dismount a trailer body from a vehicle trailer using hydraulic jacks that are detachably connectable to the trailer body to permit the trailer body to be raised to allow removal of the wheeled trailer chassis, and to permit the trailer body to be lowered to the ground. The trailer body can then be left in position for loading or unloading of the body, and the trailer chassis can in the meantime be towed by a vehicle for transporting other trailer bodies to enable them to be left in other locations for loading and unloading.

Whilst it would be possible to provide each such trailer body with captive hydraulic jacks, this would be expensive, and the jacks could project from the body thereby increasing the overall dimensions of the trailer when fitted with the body.

US 3289868 discloses a container comprising a chassis provided at each corner with jacking formations in the form of slots into which mounting tabs on respective jacks are received. The chassis is provided with hydraulic circuitry which includes a hydraulic connection next to each slot. In use, respective jacks are secured to each slot and connected to the respective connection on the container chassis. The hydraulic circuit is then connected to an external pump via a control unit.

According to one aspect of the invention we provide a removable load carrying trailer body and vehicle trailer combination, the vehicle trailer comprising a wheeled trailer chassis having releasable connections with the chassis of the removable trailer body, whereby the trailer body can be supported by the trailer chassis during manoeuvring and travel of the trailer chassis, a plurality of hydraulic jacks adapted to be detachably connected to spaced-apart jacking formations provided on the body chassis, the hydraulic jacks being adapted to be driven by a hydraulic pump carried by the trailer chassis, the arrangement being such that when the jacks are assembled to the body chassis, the body can be lifted clear of the trailer chassis to enable the trailer chassis to be wheeled out from under the body, and the body to be lowered to the ground by the hydraulic jacks, which can then be disconnected from the body chassis **characterised in that** each body chassis corner is provided with an orthogonal pair of jacking formations to provide a choice of orientation of the hydraulic jacks.

The advantage of mounting the hydraulic pump on the trailer chassis is that the pump can be used with any such detachable trailer body that is to be delivered to a site or collected therefrom.

A motor for driving the pump is preferably mounted on the trailer chassis, and the motor is preferably an electric motor powered by batteries carried by the trailer chassis.

The trailer batteries are preferably arranged to be charged by the towing vehicle during towing of the trailer.

It will be appreciated that sufficiently long, flexible hydraulic hoses are required to enable the trailer chassis to be withdrawn from beneath the trailer body whilst the trailer body is supported on the hydraulic jacks. Preferably the body chassis is fitted with two hydraulic circuits that provide hydraulic connections to hose connection points on the body chassis adjacent to the respective jacking formations, to enable the respective jacks to be connected by respective jack hoses to the respectively adjacent hose connection points, the hydraulic circuits being each connected to at least one pair of pump hose connection points on the body chassis for connecting the respective circuits to the long hoses connected to the pump.

The hydraulic circuits are provided by metal piping that reduces the requirement for lengths of flexible hose that can be vulnerable to damage.

The jacking formations are preferably located at substantially the corners of the body chassis, which may also be provided intermediate the ends of the chassis with spaced-apart sockets for receiving the forks of a fork-lift truck.

The trailer chassis is preferably provided with a stowing location to receive the jacks when they are not being used during transportation of the trailer chassis.

Preferably the combination of the trailer chassis and trailer body is dimensioned so as to be of a width that can be accommodated within a standard car-parking bay. This also enables the combination to be accommodated on a house drive or similar parking space, or roadside position or any suitable hardstanding.

The trailer body may be of various forms, for example platforms, tanks, and open or closed boxes.

In one preferred embodiment the trailer body is a furniture container having doors to enable furniture to be loaded, during moving house for example. The doors may be provided at one end of the container and/or on the side, and the container mountable on the trailer either end forwards, to provide various combinations of the door position to suit the access available at the parking site.

The trailer chassis may be provided with an electrical motor capable of driving the trailer wheels, to enable the trailer when detached from a towing vehicle to be manoeuvred in confined spaces where it would be difficult to accommodate the towing vehicle.

The electrical motor for driving the wheels is preferably powered by the same batteries as are used to power the hydraulic pumps.

According to a second aspect of the invention we provide a load carrying trailer body adapted to be mounted on a wheeled trailer chassis and secured thereto by releasable connections, the trailer body comprising a body chassis provided with a plurality of spaced-apart jacking formations for engagement by respective hydraulic jacks, the body chassis being fitted with two hydraulic circuits that provide hydraulic connections to hose connection points on the body chassis positioned adjacent to the respective jacking formations, to enable the respective jacks to be connected by respective jack hoses to the respectively adjacent hose connection points, the hydraulic circuits being each connected to at least one pair of pump hose connection points on the body chassis for connecting the respective circuits by hoses to a hydraulic pump not mounted on the body **characterised in that** each body chassis corner is provided with an orthogonal pair of jacking formations to provide a choice of orientation of the hydraulic jacks.

A vehicle trailer, removable trailer body, and associated jacking assembles all in accordance with the invention will now be described, by way of example only, with reference to the accompanying drawings in which:
**Figure 1** is a side elevation of the vehicle trailer;
**Figure 2** is a partial perspective view of one lower corner of a trailer body in the form of a furniture container adapted to be mounted on the trailer of Figure 1;
**Figure 3** is a plan view of a jacking leg about to be connected to one corner of the trailer body chassis;
**Figure 4** is a side-elevation of a jacking leg, and showing a side-elevation of a stabilising collar;
**Figure 5** is a plan view of a corner of the trailer body showing the stabilising collar in plan;
**Figure 6** is a side-elevation of the trailer body;
**Figure 7** is a partial end view of the trailer body;
**Figure 8** is an underplan view of the trailer body chassis showing the rigid hydraulic lines, and showing the alternative orientations of the jacking legs, prior to connection of the jacking legs to the body chassis, the flexible hydraulic hoses connecting the jacks to the rigid lines also being shown;
**Figure 9** is a partial side elevation of the trailer, similar to Figure 1, but showing the location of the hydraulic pump and hydraulic reservoir, and showing the trailer body resting on the ground behind the trailer;
**Figure 10** is an enlarged side elevation of the portion of the body chassis showing a pair of quick fit non-drip connectors for connecting flexible jack hoses to the respective hydraulic lines carried by the body chassis; and
**Figure 11** is a section on the line 11-11 of Figure 10 showing the mounting of a hydraulic point on the body chassis for receiving a detachable jack hose.

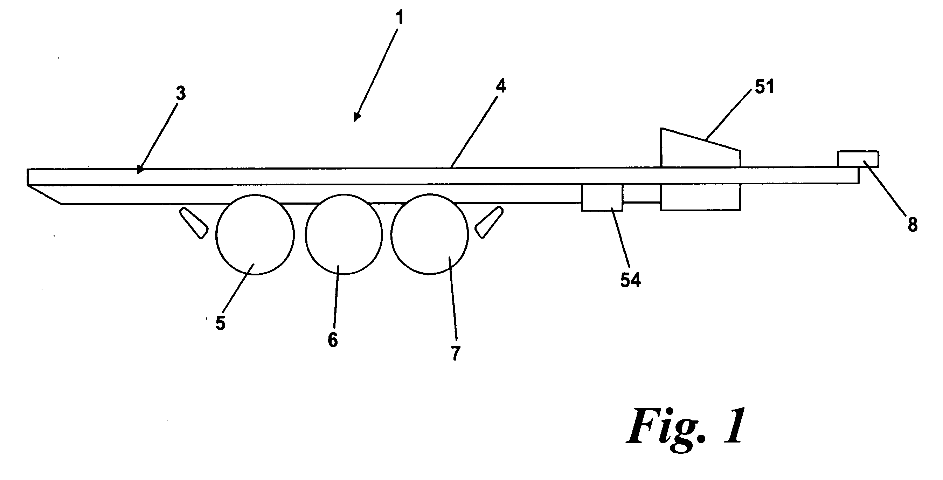

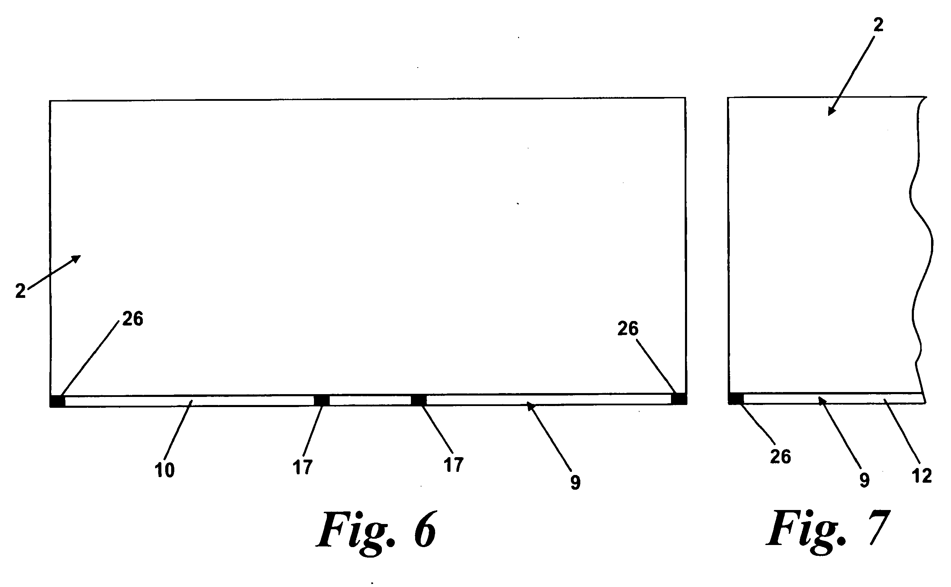

With reference to Figures 1, 6 and 7, a vehicle trailer 1 and removable trailer body 2 are shown, the trailer body being dismounted from the trailer 1. The trailer 1 comprises a trailer chassis 3 providing a flat upper load-carrying platform 4, the chassis being mounted on three pairs of wheels 5, 6, 7, the front and rear pairs of wheels 5, 7 being arranged to be driven by electric motors, not shown, during manoeuvring at slow speed of the trailer. A conventional towing hitch 8 incorporating an anti-snake coupling is provided at the front end of the trailer chassis. A steerable jockey wheel, not shown, may also be provided at the front end of the trailer chassis.

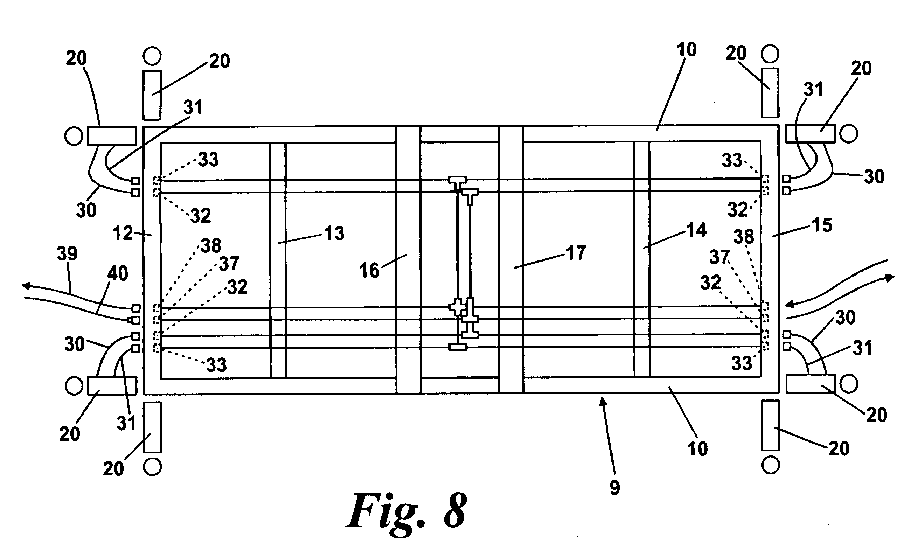

The trailer body is a box-shaped container suitable for carrying furniture and is provided with a body chassis 9 of box-section members. As shown in Figure 8, the body chassis 9 comprises longitudinal box-section side members 10, and spaced-apart transverse box-section chassis members 12, 13, 14, 15 connecting the side member 10. Wider box-section, open-ended, transverse chassis members 16, 17 are positioned towards the central region of the body chassis 9 in order to provide forklift pockets that can be engaged by the forks of a forklift truck.

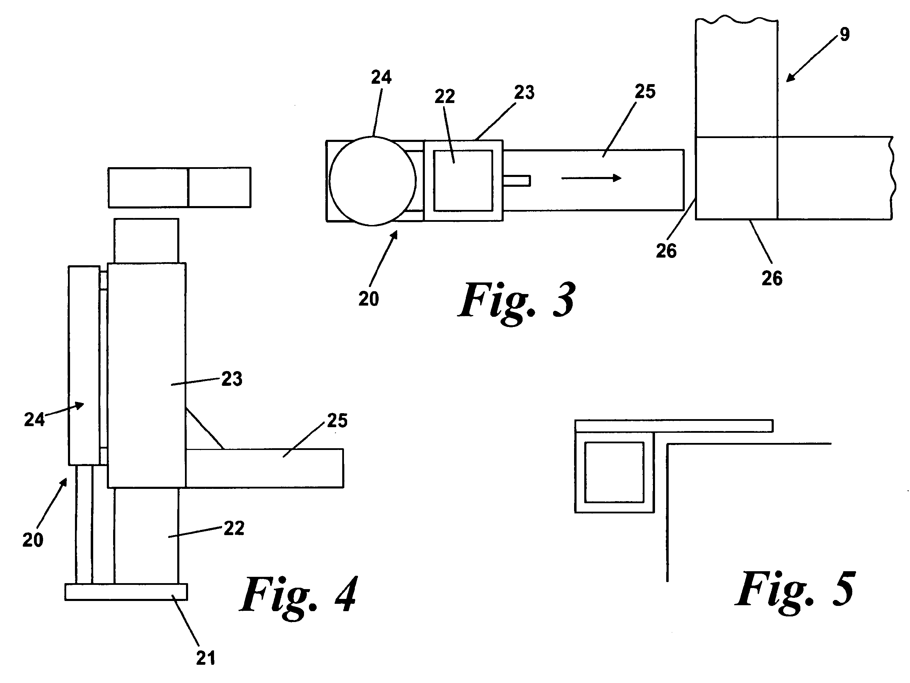

One of four identical portable jacking legs 20 is shown in Figures 3 and 4 and each leg 20 comprises a foot 21, column 22 of square-section fast with the foot 21, and a box-section sleeve 23 slidable vertically on column 22. A hydraulic ram 24 acts between the sleeve 23 and the foot 21 for raising and lowering the sleeve 23 on the column 22. Sleeve 23 fixedly carries a jack spigot 25 that is dimensioned to be received snugly in one of the jacking pockets 26 provided in the corners of the body chassis.

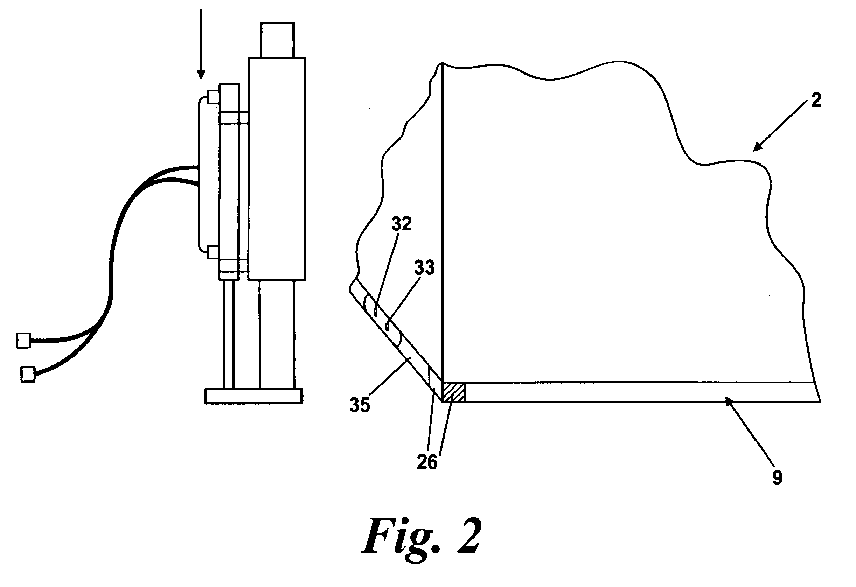

The rams 24 are double-acting and each ram is provided with a pair of short flow and return flexible hoses 30, 31, the free ends of which are provided with respective quick-release non-drip connectors adapted to connect with complimentary hose connectors 32, 33 (Figures 2, 10 and 11) that are mounted in respective cut-outs 34 in the outwardly facing walls 35 of the outer body chassis members.

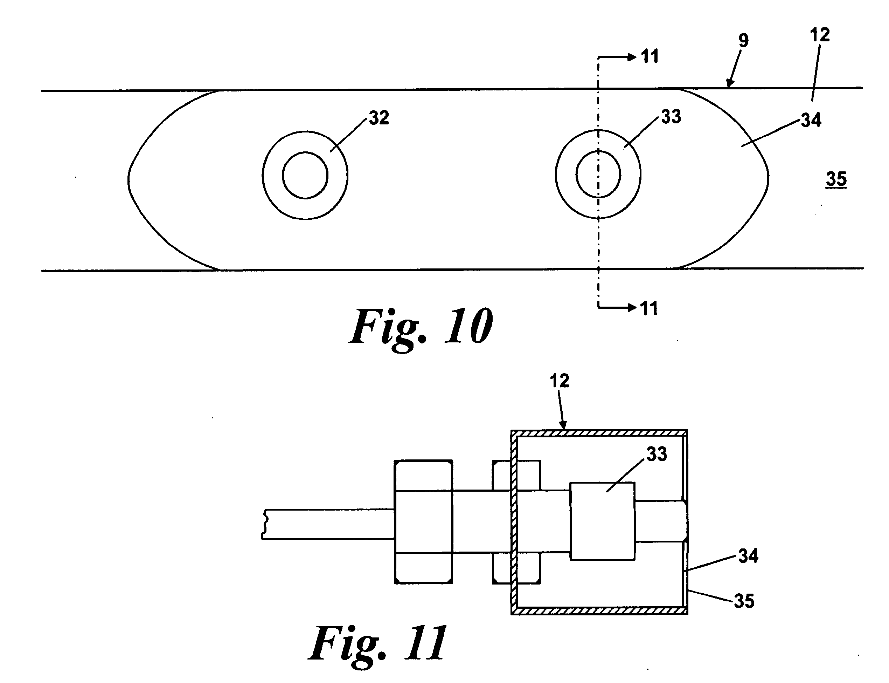

As shown in Figure 11, each connector 32, 33 is connected to rigid pipework extending through the transverse body chassis members 12 to 17 at the midheight thereof, for protection of the pipework against damage by the trailer during assembly and disassembly of the body from the trailer.

The rigid pipework comprises two circuits of steel pipes, a first circuit connecting all of the flow connectors 32 with alternative end connectors 37, and a second circuit connecting the other flow connector 33 with alternative end connectors 38, the alternative pairs of end connectors 37, 38 being provided in the transverse end chassis members 12,15 at opposite ends of the body chassis in order to enable long flexible hoses 39, 40 to be attached to either end of the body, according to which way round the body is to be mounted on the trailer.

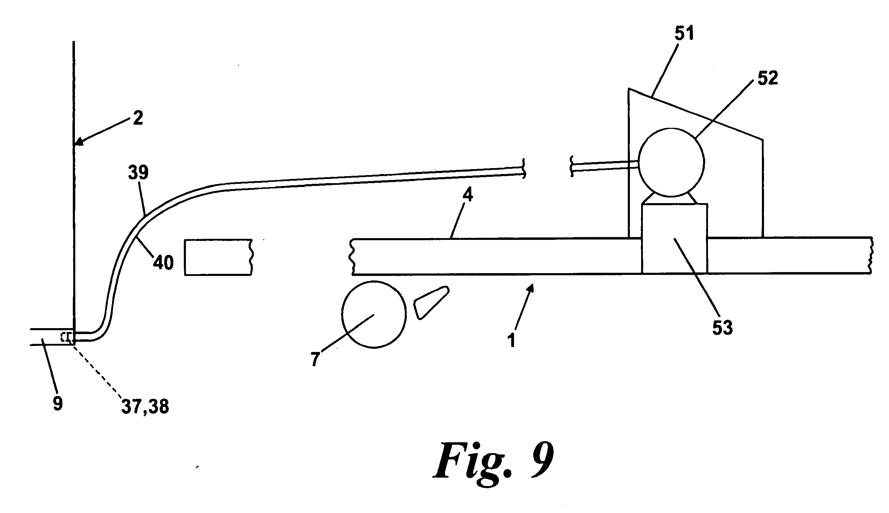

As shown in Figures 1 and 9 the trailer chassis 3 carries a housing 51 for an electrically driven hydraulic pump 52 and hydraulic reservoir 53, the motor of the pump 52 being powered by batteries carried by the trailer in battery compartment 54.

The electric motor driving pump 52 can also be used to drive wheels 5 and 7 to enable the trailer and load to be manoeuvred into tight spaces when disconnected from a towing vehicle. Any convenient electrical transmission 5, 7 to the wheels can be used.

As shown in Figure 9 the flexible hoses 35, 40 are sufficiently long to enable the jacks to be operated when the trailer 1 has been driven out from under the body 2.

The trailer platform 4 and body chassis 9 are provided on this confronting (when arranged in registry with one another) upper and lower surfaces with suitable releasable connections, not shown, to enable the body to be secured to the trailer during towing by a vehicle, and during slow-speed manoeuvring of the trailer. The releasable connections may, for example, take the form of twist-locks as provided for securing conventional freight containers in position, although a smaller version of such freight container twist-locks will be appropriate.

The jacks 20 are stowed in the vehicle during towing, or in a suitable housing on the trailer chassis, such as a housing in front of housing 51.

When the trailer has been manoeuvred into a space where the body is to be left, the jacks are assembled to the body chassis, and the short hoses 30, 31 are each connected to the respective adjacent connectors 32, 33. The long hoses 39, 40 are then connected to connectors 37, 38 on one end of the body chassis. The pump 52 is then operated to cause the jack rams 24 to be extended. Once the jack feet 21 have contacted the ground, the further operation of the pump 52, causes the trailer body to be lifted clear of the twist-locks, and to be raised by a sufficient amount to permit the trailer 1 to be manoeuvred out from under the body.

The jacks are then lowered to allow the body chassis to come to rest on the ground. The jacks 20 and long hoses 39, 40 can then be disconnected to allow the trailer to be removed from the site, the jacks being stowed again either in the vehicle or on the trailer.

## Claims

1. A removable load carrying trailer body (2) and vehicle trailer (1) combination, the vehicle trailer (1) comprising a wheeled trailer chassis (3) having releasable connections with the chassis of the removable trailer body (2), whereby the trailer body (2) can be supported by the trailer chassis (3) during manoeuvring and travel of the trailer chassis (3), a plurality of hydraulic jacks (20) adapted to be detachably connected to spaced-apart jacking formations (26) provided on the body chassis, the hydraulic jacks (20) being adapted to be driven by a hydraulic pump (52) carried by the trailer chassis (3), the arrangement being such that when the jacks (20) are assembled to the body chassis, the body (2) can be lifted clear of the trailer chassis (3) to enable the trailer chassis (3) to be wheeled out from under the body (2), and the body (2) to be lowered to the ground by the hydraulic jacks (20), which can then be disconnected from the body chassis, **characterised in that** each body chassis corner is provided with an orthogonal pair of jacking formations to provide a choice of orientation of the hydraulic jacks,.

2. The removable load carrying trailer body (2) and vehicle trailer (1) combination of claim 1 wherein the pump (52) can be used with any such detachable trailer body that is to be delivered to a site or collected therefrom.

3. The removable load carrying trailer body (2) and vehicle trailer (1) combination of claim 1 or claim 2 wherein a motor for driving the pump (52) is mounted on the trailer chassis.

4. The removable load carrying trailer body (2) and vehicle trailer (1) combination of claim 3 wherein the motor is an electric motor powered by batteries carried by the trailer chassis (3).

5. The removable load carrying trailer body (2) and vehicle trailer (1) combination of claim 4 wherein the trailer batteries are arranged to be charged by the towing vehicle during towing of the trailer (1).

6. The removable load carrying trailer body (2) and vehicle trailer (1) combination of any one of claims 1 to 5 wherein sufficiently long, flexible hydraulic hoses (35, 40) are used to enable the trailer chassis (3) to be withdrawn from beneath the trailer body (2) whilst the trailer body (2) is supported on the hydraulic jacks (20).

7. The removable load carrying trailer body (2) and vehicle trailer (1) combination of any of the preceding claims wherein the body chassis is fitted with two hydraulic circuits that provide hydraulic connections to hose connection points on the body chassis adjacent to the respective jacking formations (26), to enable the respective jacks (20) to be connected by respective jack hoses to the respectively adjacent hose connection points.

8. The removable load carrying trailer body (2) and vehicle trailer (1) combination of claim 7 wherein the hydraulic circuits being each connected to at least one pair of pump hose connection points on the body chassis for connecting the respective circuits to the long hoses (35, 40) connected to the pump.

9. The removable load carrying trailer body (2) and vehicle trailer (1) combination of claim 7 or claim 8 wherein the hydraulic circuits are provided by metal piping that reduces the requirement for lengths of flexible hose that can be vulnerable to damage.

10. The removable load carrying trailer body (2) and vehicle trailer (1) combination of any one of the preceding claims wherein the jacking formations (26) are located at substantially the corners of the body chassis.

11. The removable load carrying trailer body (2) and vehicle trailer (1) combination of any one of claims 1 to 9 wherein the jacking formations (26) are provided intermediate the ends of the chassis with spaced-apart sockets for receiving the forks of a fork-lift truck.

12. The removable load carrying trailer body (2) and vehicle trailer (1) combination of any one of the preceding claims wherein the trailer chassis is provided with a stowing location to receive the jacks when they are not being used during transportation of the trailer chassis.

13. The removable load carrying trailer body (2) and vehicle trailer (1) combination of any one of the preceding claims wherein the combination of the trailer chassis (3) and trailer body (2) is dimensioned so as to be of a width that can be accommodated within a standard car-parking bay.

14. The removable load carrying trailer body (2) and vehicle trailer (1) combination of any one of the preceding claims wherein the trailer body (2) comprises at least one platform (4).

15. The removable load carrying trailer body (2) and vehicle trailer (1) combination of any one of the preceding claims wherein the trailer body (2) comprises at least one tank.

16. The removable load carrying trailer body (2) and vehicle trailer (1) combination of any one of the preceding claims wherein the trailer body (2) comprises at least one open box.

17. The removable load carrying trailer body (2) and vehicle trailer (1) combination of any one of the preceding claims wherein the trailer body (2) comprises at least one closed box.

18. The removable load carrying trailer body (2) and vehicle trailer (1) combination of any one of the preceding claims wherein the trailer body (2) is a furniture container having doors to enable furniture to be loaded, during moving house for example.

19. The removable load carrying trailer body (2) and vehicle trailer (1) combination of claim 18 wherein the doors are provided at one end of the container.

20. The removable load carrying trailer body (2) and vehicle trailer (1) combination of claim 18 wherein the doors are provided on the side of the container.

21. The removable load carrying trailer body (2) and vehicle trailer (1) combination of claim 18 wherein the doors are provided at one end of the container and on the side of the container.

22. The removable load carrying trailer body (2) and vehicle trailer (1) combination of any one of the preceding claims wherein the container is mountable on the trailer either end forwards, to provide various combinations of the door position to suit the access available at the parking site.

23. The removable load carrying trailer body (2) and vehicle trailer (1) combination of any one of the preceding claims wherein the trailer chassis (3) is provided with an electrical motor capable of driving the trailer wheels (5, 6, 7), to enable the trailer (1) when detached from a towing vehicle to be manoeuvred in confined spaces where it would be difficult to accommodate the towing vehicle.

24. The removable load carrying trailer body (2) and vehicle trailer (1) combination of claim 23 wherein the electrical motor for driving the wheels (5, 6, 7) is powered by the same batteries as are used to power the hydraulic pump (52).

25. A load carrying trailer body (2) adapted to be mounted on a wheeled trailer chassis (3) and secured thereto by releasable connections, the trailer body (2) comprising a body chassis provided with a plurality of spaced-apart jacking formations (26) for engagement by respective hydraulic jacks (20), the body chassis being fitted with two hydraulic circuits that provide hydraulic connections to hose connection points on the body chassis positioned adjacent to the respective jacking formations (26), to enable the respective jacks (20) to be connected by respective jack hoses to the respectively adjacent hose connection points, the hydraulic circuits being each connected to at least one pair of pump hose connection points on the body chassis for connecting the respective circuits by hoses to a hydraulic pump (52) not mounted on the body (2), **characterised in that** each body chassis corner is provided with an orthogonal pair of jacking formations to provide a choice of orientation of the hydraulic jacks.

## Patentansprüche

1. Abnehmbarer lasttragender Anhängeraufbau (2) in Kombination mit einem Fahrzeuganhänger (1), wobei der Fahrzeuganhänger (1) ein Anhängerfahrgestell (3) mit Rädern umfasst, das lösbare Verbindungen zum abnehmbaren Anhängeraufbau (2) hat, wobei der Anhängeraufbau (2) während des Manövrierens und der Fahrt des Anhängerfahrgestells (3) von dem Anhängerfahrgestell (3) getragen werden kann, sowie mehrere Hydraulikheber (20), die so angepasst sind, dass sie abnehmbar an beabstandete Hebeformationen (26) angeschlossen sind, die auf dem Aufbaurahmen angebracht sind, wobei die Hydraulikheber (20) so angepasst sind, dass sie von einer Hydraulikpumpe (52) antreibbar sind, die von dem Anhängerfahrgestell getragen wird, wobei die Anordnung derart ist, dass der Aufbau (2), wenn die Heber (20) an den Aufbaurahmen angebracht sind, von dem Anhängerfahrgestell (3) abhebbar ist, um zu ermöglichen, das Anhängerfahrgestell (3) unter dem Aufbau (2) wegzuschieben und den Aufbau (2) durch die Hydraulikheber (20), die dann von dem Aufbaurahmen abnehmbar sind, auf den Boden abzusenken, **dadurch gekennzeichnet, dass** sich in jeder Ecke des Aufbaurahmens ein rechtwinkliges Paar Hebeformationen befindet, um eine Auswahl für die Ausrichtung der hydraulischen Heber zu ermöglichen.

2. Abnehmbarer lasttragender Anhängeraufbau (2) in Kombination mit einem Fahrzeuganhänger (1) nach Anspruch 1, wobei die Pumpe (52) an jedem abnehmbaren Anhängeraufbau einsetzbar ist, der an einen Standort geliefert oder von dort abgeholt wird.

3. Abnehmbaren lasttragender Anhängeraufbau (2) in Kombination mit einem Fahrzeuganhänger (1) nach Anspruch 1 oder Anspruch 2, wobei ein Motor für den Antrieb der Pumpe (52) auf das Anhängerfahrgestell montiert ist.

4. Abnehmbarer lasttragender Anhängeraufbau (2) in Kombination mit einem Fahrzeuganhänger (1) nach Anspruch 3, wobei es sich bei dem Motor um einen durch Batterien angetriebenen Elektromotor handelt, der von dem Anhängerfahrgestell (3) getragen wird.

5. Abnehmbarer lasttragender Anhängeraufbau (2) in Kombination mit einem Fahrzeuganhänger (1) nach Anspruch 4, wobei die Anhängerbatterien so ausgeführt sind, dass sie von dem Zugfahrzeug ladbar sind, während dieses den Anhänger (1) zieht.

6. Abnehmbarer lasttragender Anhängeraufbau (2) in Kombination mit einem Fahrzeuganhänger (1) nach Anspruch 1 bis 5, wobei ausreichend lange, flexible Hydraulikschläuche (35, 40) eingesetzt sind, um zu ermöglichen, das Anhängerfahrgestell (3) unter dem Anhängeraufbau (2) wegzuziehen, während der Anhängeraufbau (2) von den Hydraulikhebem (20) getragen wird.

7. Abnehmbarer lasttragender Anhängeraufbau (2) in Kombination mit einem Fahrzeuganhänger (1) nach einem der vorhergehenden Ansprüche, wobei der Aufbaurahmen mit zwei Hydraulikkreisen ausgestattet ist, die Hydraulikanschlüsse an Schlauchanschlussstellen an dem Aufbaurahmen neben den jeweiligen Hebeformationen (26) aufweisen, um zu ermöglichen, die jeweiligen Heber (20) über entsprechende Heberschläuche an die entsprechenden Schlauchanschlussstellen anzuschließen.

8. Abnehmbarer lasttragender Anhängeraufbau (2) in Kombination mit einem Fahrzeuganhänger (1) nach Anspruch 7, wobei die Hydraulikkreise jeweils an mindestens ein Paar Pumpenschlauchanschlussstellen am Aufbaurahmen angeschlossen sind, um die jeweiligen Kreise an die langen Schläuche (35, 40), die an die Pumpe angeschlossen sind, anzuschließen.

9. Abnehmbarer lasttragender Anhängeraufbau (2) in Kombination mit einem Fahrzeuganhänger (1) nach Anspruch 7 oder Anspruch 8, bei der die Hydraulikkreise mit Metallrohren ausgeführt sind, wodurch die Notwendigkeit langer flexibler Schläuche, die anfällig für Schäden sind, reduziert wird.

10. Abnehmbarer lasttragender Anhängeraufbau (2) in Kombination mit einem Fahrzeuganhänger (1) nach einem der vorhergehenden Ansprüche, wobei sich die Hebeformationen (26) im Wesentlichen in den Ecken des Aufbaurahmens befinden.

11. Abnehmbarer lasttragender Anhängeraufbau (2) in Kombination mit einem Fahrzeuganhänger (1) nach einem der Ansprüche 1 bis 9, wobei sich die Hebeformationen (26) zwischen den Enden des Aufbaus befinden, mit beabstandeten Stutzen für die Aufnahme der Gabeln eines Gabelstaplers.

12. Abnehmbarer lasttragender Anhängeraufbau (2) in Kombination mit einem Fahrzeuganhänger (1) nach einem der vorhergehenden Ansprüche, wobei das Anhängerfahrgestell mit einer Vorrichtung ausgestattet ist, um die Heber unterzubringen, wenn diese während des Transports des Anhängerfahrgestells nicht eingesetzt sind.

13. Abnehmbarer lasttragender Anhängeraufbau (2) in Kombination mit einem Fahrzeuganhänger (1) nach einem der vorhergehenden Ansprüche, wobei die Kombination aus dem Anhängerfahrgestell (3) und dem Anhängeraufbau (2) so breit ist, dass sie in einer standardmäßigen Parkbucht untergebracht werden kann.

14. Abnehmbarer lasttragender Anhängeraufbau (2) in Kombination mit einem Fahrzeuganhänger (1) nach einem der vorhergehenden Ansprüche, wobei der Anhängeraufbau (2) zumindest eine Plattform (4) umfasst.

15. Abnehmbarer lasttragender Anhängeraufbau (2) in Kombination mit einem Fahrzeuganhänger (1) nach einem der vorhergehenden Ansprüche, wobei der Anhängeraufbau (2) zumindest einen Tank umfasst.

16. Abnehmbarer lasttragender Anhängeraufbau (2) in Kombination mit einem Fahrzeuganhänger (1) nach einem der vorhergehenden Ansprüche, wobei der Anhängeraufbau (2) zumindest einen offenen Kasten umfasst.

17. Abnehmbarer lasttragender Anhängeraufbau (2) in Kombination mit einem Fahrzeuganhänger (1) nach einem der vorhergehenden Ansprüche, wobei der Anhängeraufbau (2) zumindest einen geschlossenen Kasten umfasst.

18. Abnehmbarer lasttragender Anhängeraufbau (2) in Kombination mit einem Fahrzeuganhänger (1) nach einem der vorhergehenden Ansprüche, wobei es sich bei dem Anhängeraufbau (2) um einen Möbelcontainer handelt, der über Türen verfügt, um zu ermöglichen, Möbel zu be- und entladen, zum Beispiel bei einem Umzug.

19. Abnehmbarer lasttragender Anhängeraufbau (2) in Kombination mit einem Fahrzeuganhänger (1) nach Anspruch 18, wobei sich die Türen an einem Ende des Containers befinden.

20. Abnehmbarer lasttragender Anhängeraufbau (2) in Kombination mit einem Fahrzeuganhänger (1) nach Anspruch 18, wobei sich die Türen an der Seite des Containers befinden.

21. Abnehmbarer lasttragender Anhängeraufbau (2) in Kombination mit einem Fahrzeuganhänger (1) nach Anspruch 18, wobei sich die Türen an einem Ende des Containers und an der Seite des Containers befinden.

22. Abnehmbarer lasttragender Anhängeraufbau (2) in Kombination mit einem Fahrzeuganhänger (1) nach einem der vorhergehenden Ansprüche, wobei der Container mit jedem der beiden Enden nach vom auf den Anhänger montierbar ist, um verschiedene Kombinationen der Türposition zu ermöglichen, um diese an den auf dem Parkplatz vorhandenen Zugang anzupassen.

23. Abnehmbarer lasttragender Anhängeraufbau (2) in Kombination mit einem Fahrzeuganhänger (1) nach einem der vorhergehenden Ansprüche, wobei das Anhängerfahrgestell (3) mit einem Elektromotor ausgestattet ist, der die Anhängerräder (5, 6, 7) antreibt, um zu ermöglichen, den Anhänger (1), wenn er von dem Zugfahrzeug abgenommen wird, auf engem Raum zu manövrieren, wo es schwierig wäre, das Zugfahrzeug unterzubringen.

24. Abnehmbarer lasttragender Anhängeraufbau (2) in Kombination mit einem Fahrzeuganhänger (1) nach Anspruch 23, wobei der Elektromotor für den Antrieb der Räder (5, 6, 7) von den gleichen Batterien angetrieben wird, die eingesetzt sind, um die Hydraulikpumpe (52) anzutreiben.

25. Lasttragender Anhängeraufbau (2), der angepasst auf ein Anhängerfahrgestell (3) mit Rädern montiert und durch lösbare Verbindungen darauf gesichert ist, wobei der Anhängeraufbau (2) einen Aufbaurahmen mit mehreren beabstandeten Hebeformationen (26) für die entsprechenden Hydraulikheber (20) umfasst, wobei der Aufbaurahmen mit zwei Hydraulikkreisen ausgestattet ist, Hydraulikanschlüsse an Schlauchanschlussstellen am Aufbaurahmen ermöglichen, die sich neben den entsprechenden Hebeformationen (26) befinden, um zu ermöglichen, die jeweiligen Heber (20) durch entsprechende Heberschläuche an die jeweils danebenliegenden Schlauchanschlussstellen anzuschließen, wobei die Hydraulikkreise jeweils an mindestens ein Paar Pumpenschlauchanschlussstellen am Aufbaurahmen angeschlossen werden, um die jeweiligen Kreise durch Schläuche an eine Hydraulikpumpe (52) anzuschließen, die nicht am Aufbau (2) montiert ist, **dadurch gekennzeichnet, dass** sich in jeder Ecke des Aufbaurahmens ein rechteckiges Paar Hebeformationen befindet, um eine Auswahl für die Ausrichtung der Hydraulikheber zu ermöglichen.

## Revendications

1. Combinaison composée d'une remorque de véhicule (1) et d'un corps de remorque amovible de transport de charge (2), la remorque de véhicule (1) comprenant un châssis de remorque à roues (3) ayant des raccordements amovibles avec le châssis du corps de remorque amovible (2), moyennant quoi le corps de remorque (2) peut être supporté par le châssis de remorque (3) pendant les manoeuvres et le déplacement du châssis de remorque (3), une pluralité de vérins hydrauliques (20) adaptés pour être raccordés de manière détachable à des formations de vérin espacées (26) prévues sur le châssis de corps, les vérins hydrauliques (20) étant adaptés pour être actionnés par une pompe hydraulique (52) portée par le châssis de remorque (3), l'agencement étant tel que lorsque les vérins (20) sont assemblés au châssis de corps, le corps (2) peut être levé du châssis de remorque (3) pour permettre au châssis de remorque (3) de sortir d'en dessous du corps en roulant (2), et au corps (2) d'être abaissé au sol par les vérins hydrauliques (20), qui peuvent ensuite être détachés du châssis de corps, **caractérisée en ce que** chaque coin du châssis de corps est doté d'une paire orthogonale de formations de vérin pour fournir un choix d'orientation des vérins hydrauliques.

2. Combinaison composée d'une remorque de véhicule (1) et d'un corps de remorque amovible de transport de charge (2) selon la revendication 1, dans laquelle la pompe (52) peut être utilisée avec n'importe quel corps de remorque détachable qui doit être livré sur un site ou collecté de celui-ci.

3. Combinaison composée d'une remorque de véhicule (1) et d'un corps de remorque amovible de transport de charge (2) selon la revendication 1 ou la revendication 2, dans laquelle un moteur pour actionner la pompe (52) est monté sur le châssis de remorque.

4. Combinaison composée d'une remorque de véhicule (1) et d'un corps de remorque amovible de transport de charge (2) selon la revendication 3, dans laquelle le moteur est un moteur électrique alimenté par des batteries supportées par le châssis de remorque (3).

5. Combinaison composée d'une remorque de véhicule (1) et d'un corps de remorque amovible de transport de charge (2) selon la revendication 4, dans laquelle les batteries de remorque sont agencées pour être chargées par le véhicule tracteur pendant le remorquage de la remorque (1).

6. Combinaison composée d'une remorque de véhicule (1) et d'un corps de remorque amovible de transport de charge (2) selon l'une quelconque des revendications 1 à 5, dans laquelle on utilise des tuyaux hydrauliques flexibles suffisamment longs (35, 40) pour permettre au châssis de remorque (3) d'être retiré de sous le corps de remorque (2) alors que le corps de remorque (2) est supporté sur les vérins hydrauliques (20).

7. Combinaison composée d'une remorque de véhicule (1) et d'un corps de remorque amovible de transport de charge (2) selon l'une quelconque des revendications précédentes, dans laquelle le châssis de corps est équipé de deux circuits hydrauliques qui fournissent des raccordements hydrauliques aux points de raccordement des tuyaux flexibles sur le châssis de corps adjacents aux formations de vérin (26) respectives, pour permettre aux vérins (20) respectifs d'être raccordés par des tuyaux flexibles de vérin respectifs aux points de raccordement de tuyau flexible respectivement adjacents.

8. Combinaison composée d'une remorque de véhicule (1) et d'un corps de remorque amovible de transport de charge (2) selon la revendication 7, dans laquelle les circuits hydrauliques sont chacun raccordés à au moins une paire de points de raccordement de tuyaux flexibles de pompe sur le châssis de corps pour raccorder les circuits respectifs au tuyaux flexibles longs (35, 40) raccordés à la pompe.

9. Combinaison composée d'une remorque de véhicule (1) et d'un corps de remorque amovible de transport de charge (2) selon la revendication 7 ou 8, dans laquelle les circuits hydrauliques sont fournis par des tuyaux métalliques qui réduisent l'exigence de longueurs de tuyau flexible qui peuvent être vulnérables à l'endommagement.

10. Combinaison composée d'une remorque de véhicule (1) et d'un corps de remorque amovible de transport de charge (2) selon l'une quelconque des revendications précédentes, dans laquelle les formations de vérin (26) sont situées sensiblement aux coins du châssis de corps.

11. Combinaison composée d'une remorque de véhicule (1) et d'un corps de remorque amovible de transport de charge (2) selon l'une quelconque des revendications 1 à 9, dans laquelle les formations de vérin (26) sont prévues entre les extrémités du châssis avec des douilles espacées pour recevoir les fourches d'un chariot élévateur à fourche.

12. Combinaison composée d'une remorque de véhicule (1) et d'un corps de remorque amovible de transport de charge (2) selon l'une quelconque des revendications précédentes, dans laquelle le châssis de remorque est prévu avec un emplacement de rangement pour recevoir les vérins lorsqu'ils ne sont pas utilisés pendant le transport du châssis de remorque.

13. Combinaison composée d'une remorque de véhicule (1) et d'un corps de remorque amovible de transport de charge (2) selon l'une quelconque des revendications précédentes, dans laquelle la combinaison composée du châssis de remorque (3) et du corps de remorque (2) est dimensionnée afin d'avoir une largeur qui peut être logée dans une aire de stationnement de voiture standard.

14. Combinaison composée d'une remorque de véhicule (1) et d'un corps de remorque amovible de transport de charge (2) selon l'une quelconque des revendications précédentes, dans laquelle le corps de remorque (2) comprend au moins une plate-forme (4).

15. Combinaison composée d'une remorque de véhicule (1) et d'un corps de remorque amovible de transport de charge (2) selon l'une quelconque des revendications précédentes, dans laquelle le corps de remorque (2) comprend au moins un réservoir.

16. Combinaison composée d'une remorque de véhicule (1) et d'un corps de remorque amovible de transport de charge (2) selon l'une quelconque des revendications précédentes, dans laquelle le corps de remorque (2) comprend au moins une boîte ouverte.

17. Combinaison composée d'une remorque de véhicule (1) et d'un corps de remorque amovible de transport de charge (2) selon l'une quelconque des revendications précédentes, dans laquelle le corps de remorque (2) comprend au moins une boîte fermée.

18. Combinaison composée d'une remorque de véhicule (1) et d'un corps de remorque amovible de transport de charge (2) selon l'une quelconque des revendications précédentes, dans laquelle le corps de remorque (2) est un conteneur de meubles ayant des portes pour permettre de charger des meubles, pendant les déménagements par exemple.

19. Combinaison composée d'une remorque de véhicule (1) et d'un corps de remorque amovible de transport de charge (2) selon la revendication 18, dans laquelle les portes sont prévues au niveau d'une extrémité du conteneur.

20. Combinaison composée d'une remorque de véhicule (1) et d'un corps de remorque amovible de transport de charge (2) selon la revendication 18, dans laquelle les portes sont prévues sur le côté du conteneur.

21. Combinaison composée d'une remorque de véhicule (1) et d'un corps de remorque amovible de transport de charge (2) selon la revendication 18, dans laquelle les portes sont prévues au niveau d'une extrémité du conteneur et sur le côté du conteneur.

22. Combinaison composée d'une remorque de véhicule (1) et d'un corps de remorque amovible de transport de charge (2) selon l'une quelconque des revendications précédentes, dans laquelle le conteneur peut être monté sur la remorque à chaque extrémité, pour fournir différentes combinaisons de la position de porte afin de s'adapter à l'accès disponible sur le site de stationnement.

23. Combinaison composée d'une remorque de véhicule (1) et d'un corps de remorque amovible de transport de charge (2) selon l'une quelconque des revendications précédentes, dans laquelle le châssis de remorque (3) est muni d'un moteur électrique pouvant entraîner les roues (5, 6, 7) de la remorque, pour permettre à la remorque (1) lorsqu'elle est détachée d'un véhicule tracteur d'être manoeuvrée dans des espaces confinées où il est difficile de loger le véhicule tracteur.

24. Combinaison composée d'une remorque de véhicule (1) et d'un corps de remorque amovible de transport de charge (2) selon la revendication 23, dans laquelle le moteur électrique pour entraîner les roues (5, 6, 7) est alimenté par les mêmes batteries que celles utilisées pour alimenter la pompe hydraulique (52).

25. Corps de remorque de transport de charge (2) adapté pour être monté sur un châssis de remorque à roues (3) et fixé à celui-ci par des raccordements amovibles, le corps de remorque (2) comprenant un châssis de corps muni d'une pluralité de formations de vérin espacées (26) pour la mise en prise par des vérins hydrauliques (20) respectifs, le châssis de corps étant équipé de deux châssis hydrauliques qui fournissent des raccordements hydrauliques aux points de raccordement de tuyau flexible sur le châssis de corps positionné de manière adjacente aux formations de vérin (26) respectives, pour permettre aux vérins (20) respectifs d'être raccordés par les tuyaux flexibles de vérin respectifs aux points de raccordement de tuyau flexible respectivement adjacents, les circuits hydrauliques étant chacun raccordés à au moins une paire de points de raccordement de tuyau flexible de pompe sur le châssis de corps pour raccorder les circuits respectifs par les tuyaux flexibles à une pompe hydraulique (52) qui n'est pas montée sur le corps (2), **caractérisée en ce que** chaque coin de châssis de corps est muni d'une paire orthogonale de formations de vérin pour fournir un choix d'orientation des vérins hydrauliques.
